# EUROPÄISCHE PATENTSCHRIFT

(11) **EP 2 665 799 B1**
(45) Veröffentlichungstag und Bekanntmachung des Hinweises auf die Patenterteilung: **08.02.2017**
(21) Anmeldenummer: 11804959.2
(22) Anmeldetag: 20.12.2011
(51) Int. Cl.: C10B 33/14, C10B 39/14

(54) **VORRICHTUNG UND VERFAHREN ZUR ERHÖHUNG DER INNEREN OBERFLÄCHE EINES KOMPAKTEN KOKSKUCHENS IN EINER AUFNAHMEWANNE**
DEVICE AND METHOD FOR INCREASING THE INTERNAL SURFACE OF A COMPACT COKE CAKE IN A RECEIVING TROUGH
DISPOSITIF ET PROCÉDÉ POUR AUGMENTER LA SURFACE INTÉRIEURE D'UN GÂTEAU DE COKE COMPACTE DANS UNE CUVE DE RÉCEPTION

(30) Priorität: 21.01.2011 DE 102011009176
(43) Veröffentlichungstag der Anmeldung: 27.11.2013
(73) Patentinhaber: ThyssenKrupp Industrial Solutions AG, 45143 Essen (DE)
(72) Erfinder: KIM, Ronald, 45144 Essen (DE); SCHÜCKER, Franz-Josef, 45478 Mülheim an der Ruhr (DE)
(74) Vertreter: ThyssenKrupp Intellectual Property GmbH
(86) Internationale Anmeldenummer: PCT/EP2011/006421
(87) Internationale Veröffentlichungsnummer: WO 2012/097845

(56) Entgegenhaltungen:
- WO-A2-2007/103649
- DE-A1-102006 047 226

## Beschreibung

Die Erfindung richtet sich auf eine Vorrichtung zur Erhöhung der inneren Oberfläche eines kompakten Kokskuchens in einer Aufnahmewanne, welche die innere Oberfläche eines aus der Koksofenkammer kommenden Kokskuchens und Kokses durch mechanisches Auseinanderbrechen oder Aufrauen erhöht, wodurch sich die Koksstruktur auflockert und sich spaltartige Vertiefungen in der kompaktierten Kokscharge herausbilden, so dass in diese spaltartigen Vertiefungen im sich anschließenden Abkühlvorgang mit Wasser eine erhöhte Wassermenge in das Innere der Kokscharge strömen kann, und woraus sich infolge der reduzierten Ablöschzeit und des geringeren Wasserverbrauches beim Löschen des Kokses eine bessere Wirtschaftlichkeit des Verfahrens einstellt. Die Erfindung richtet sich auch auf ein Verfahren zur Erhöhung der inneren Oberfläche eines kompakten Kokskuchens in einer Aufnahmewanne, welches dazu dient, einen frischen und warmen Kokskuchen aufzubrechen oder den Koks aufzurauen, um den Wasserverbrauch beim Ablöschen zu senken.

Die Verkokung von Kohle zu Koks wird häufig in Koksofenkammern vom sogenannten "Heat-Recovery"- oder "Non-Recovery"-Typ ausgeführt. Moderne Koksofenkammern weisen auf der Koksseite der Koksbatterien sogenannte Koksüberleitmaschinen auf, deren Aufgabe darin besteht, die für das Drücken des gegarten Kokses koksseitig vorzunehmenden Arbeitsgänge auszuführen. Die Kokslöscheinrichtung ist in der Regel, zumindest teilweise, gesondert unterhalb der Koksüberleitmaschine in Gestalt eines Löschwagens verfahrbar. Der Löschwagen enthält typischerweise eine Auffangwanne, die den Koks aus der Koksofenkammer aufnimmt und zu dem Löschturm verfährt. Zwischen der Auffangwanne und der Koksofenkammer befindet sich eine Koksüberleitmaschine, die in einem einfachen Fall aus einer Rampe oder einer schrägen Bodenplatte aufgebaut sein kann. Der Löschwagen wird typischerweise auf Schienen verfahren und kann mittels einer Transporteinrichtung direkt unter den Löschturm verfahren werden. Der Löschturm ist in einer häufigen Ausführungsform ein Naßlöschturm, kann jedoch auch ein Trockenlöschturm sein.

Der Koks wird üblicherweise mit mittleren Temperaturen zwischen 900 bis 1100 °C in diesen Löschwagen gedrückt. Die konventionelle Auffangwanne eines Löschwagens ist häufig durch hitzebeständige Bauteile ausgekleidet. Diese bestehen beim "Heat-Recovery" - oder "Non-Recovery" - Verkokungsverfahren in der Regel aus eben angeordneten planaren Plattenelementen, auf denen der Koks aus der Koksofenkammer über die Rampe in das Innere der Auffangwanne gleiten kann. Diese Auffangwanne wird mit dem Löschwagen, nachdem er die heiße Kokscharge vollständig aufgenommen hat, zum Löschturm verfahren. Dort wird er in einer gängigen Ausführungsform mit Wasser gelöscht. Hierzu wird das Wasser aus einem bereitstehenden Reservoir vertikal abwärts auf den heißen Kokskuchen berieselt. Das Wasser tritt dabei über Düsen aus einem Wasservorratsreservoir aus und wird gleichmäßig über der oberen Oberfläche des Kokses verteilt, wodurch sich ein homogener Wassergehalt im Koks einstellt.

Eine typische Vorrichtung mit einem Löschwagen zur Nasslöschung beschreibt die DE 1253669 B. Die Erfindung beschreibt eine Vorrichtung zum Ablöschen von aus waagrechten Verkokungskammern ausgetragenem Koks, bestehend aus einem auf der Koksseite längs der Ofenbatterie verfahrbaren oder durch einen Aufnahmewagen für den glühenden Koks beschickbaren, stationären Löschraum mit einem schlotartigen Teil und einem Koksauffangraum, dem sich ein umlaufender Förderrost mit darüber angeordneter Sprühanlage anschließt, wobei über dem Förderrost zwischen der Einrichtung zur Regelung der Koksschichthöhe und der Sprühanlage von einem aufheizbaren Medium durchflossene Rohrbündel vorgesehen sind, die gegebenenfalls mit an sich bekannten Rohrbündeln des Koksauffangraumes in Verbindung stehen. Ausführungsformen für einen Löschwagen und dessen Steuerung geben die WO 2006/089612 A1, US 5564340 A und die EP 964049 A2.

Die WO2007103649A2 beschreibt eine Vorrichtung zum Löschen von metallurgischem Koks, welcher in einem Koksofen hergestellt wird, wobei die Vorrichtung einen multifunktionellen Kokslöschwagen enthält, welcher eine Auffangwanne mit einer neigbaren und einer festsitzenden Seitenwand und einer neigbaren und einer festsitzenden Endwand enthält, und einen Neigungsmechanismus zur Neigung der neigbaren Seitenwand und der neigbaren Endwand, so dass der Kokslöschwagen von einer Seite beladen werden kann und von einer weiteren Seite entleert werden kann, wobei in einer Ausführungsform der Erfindung die Auffangwanne des Kokslöschwagens in dem Boden eine Spalteinrichtung zur Spaltung des Kokses enthält. Das Dokument D1 beschreibt auch ein Verfahren zum Löschen des Kokses, welches die Schritte des Ausdrückens des Kokskuchens in einen Überleitwagen, Transportieren des heißen Kokses zu einer Löschstation, Ausdrücken des Kokses aus dem Löschwagen in einen Kokslöschwagen, Löschen des Kokses in dem Kokslöschwagen und Ausdrücken des gelöschten Kokses in eine Lagergrube enthält.

Die DE102006047226A1 beschreibt einen Kokslöschwagen mit wenigstens einem Koksaufnahmebehälter zum Aufnehmen eines Kokskuchens aus einem Horizontalkammer-Verkokungsofen einer Koksofenbatterie, wobei der Kokslöschwagen entlang der Koksofenbatterie verfahrbar ist, und wobei der Kokskuchen nach dem Ausdrücken aus dem Verkokungsofen in den Koksaufnahmebehälter überführt wird, indem der Kokslöschwagen wenigstens eine Schneideinrichtung mit wenigstens einem Schneidmittel zum Aufschneiden des Kokskuchens in wenigstens zwei Kokskuchenteile aufweist.

Es gibt auch Ausführungsformen, in denen der Koks durch Wasserzugabe von unten gelöscht wird. Diese Ausführungsform wird auch als "Sumpflöschung" bezeichnet. Auch eine Kombination der beiden Löschverfahren ist in der Praxis anzutreffen. Typische Ausführungsformen für ein Trockenlöschverfahren geben die WO 91/09094 A1 und die EP 0084786 B1.

Anlagen zur Löschung von Koks werden in der Regel so geplant, dass man zumeist von geschütteten Kohlechargen mit geringen Dichten der Kohle von 700 bis 850 kg * m⁻³ ausgeht. Die Länge der Kohlecharge beträgt typischerweise bis zu 20 m. Konventionelle Verkokungsverfahren aus dem Stand Technik führen dazu, dass sich nach Abschluß der Verkokung Kokschargen mit Dichten zwischen 400 und 600 kg * m⁻³ herausbilden. Zu Erhöhung der Produktivität wurden in der Anlagenpraxis in der jüngeren Vergangenheit Verdichtungen der Einsatzkohlemischung mit Anfangsdichten zwischen 850 kg * m⁻³ und 1200 kg * m⁻³ eingeführt. Ein beispielhaftes Verfahren zum Verpressen der Ausgangskohle auf die genannten Dichten mit einer anschließenden Formgebung des gepressten Kohlekuchens lehrt die DE 102009012453 A1. Infolge der höheren Ausgangsdichte der Kohle erhöht sich dadurch im Anschluß an den Verkokungsvorgang ebenso die Dichte des Kokskuchens, womit auch eine Versiegelung der Oberfläche des Kokskuchens einhergeht. Dies hat zur Folge, dass das Ablöschwasser in vertikaler Richtung nicht oder nur verzögert in die Kokscharge eindringen kann.

Ein zusätzlicher Hinderungsgrund für eine effektive Kühlung der frischen Kokscharge ist der sogenannte "Leidenfrost-Effekt". Da die Temperatur der Kokscharge hoch ist, verdampft das auf die Oberfläche des heißen Kokses auftretende Wasser schlagartig. Dadurch bildet sich um die Koksstücke eine Hülle aus Wasserdampf, welche den Zutritt weiteren Wassers verhindert. Das auf die Oberfläche des Kokses treffende Wasser bildet als Dampfschicht für eine begrenzte Zeit eine Schutzhülle, welche den Koks vor einer direkten Wärmeübertragung schützt. Auf diese Weise kann das Wasser nicht effizient in das Innere des Kokses eindringen. Es strömt dadurch seitlich an ihm herunter und erreicht die inneren Koksschichten nicht.

Dadurch kommt es zu einer ungleichmäßigen Verteilung des Löschwassers über die gesamte Menge der Kokscharge. Da hierdurch auch die Kühlung durch das Löschwasser ungleichmäßig ist, ist auch die Temperaturverteilung über die Kokscharge ungleichmäßig. Auf diese Weise finden sich nach dem Ablöschen durchaus noch Stellen im Kokskuchen, die eine Kokstemperatur vom mehr als 100 °C aufweisen. Dies ist bei der Verarbeitung und Weiterverwendung des Kokses ein erhebliches Problem, da Chargenportionen von Koks mit einer Temperatur von über 100 °C die Transport-und Förderbänder beschädigen können, die häufig aus Hartgummi oder Kunststoff bestehen. Gleichzeitig besitzt der gelöschte Koks dadurch Teilchargen, die einen Wassergehalt von mehr als 3 Gewichtsprozent (Gew.-%) beinhalten. Ein erhöhter Wassergehalt des Kokses von über 3 Gew.-% Wasser ist ebenfalls ein Problem, da das Wasser bei der Weiterverarbeitung in einem Hochofenprozess zur Absenkung der Produktqualität des Roheisens führt.

Es besteht deshalb die Aufgabe, ein Verfahren zur Verfügung zu stellen, welches die Löschung und Kühlung des glühenden Kokses ermöglicht, ohne zu einer ungleichmäßigen Verteilung der Temperatur oder des Wassergehaltes der Kokscharge zu führen.

Die Erfindung löst diese Aufgabe durch eine Vorrichtung, welche in einer Aufnahmewanne angeordnet ist, und die Aufnahmewanne geeignet zur Platzierung auf oder in einem Löschwagen für frischen und warmen Koks ist, und in dem Boden der Aufnahmewanne mindestens ein unebenheitsbildendes Bauteil angeordnet ist, welches eine Bauteilhöhe von mindestens 20 mm besitzt, und sich die Oberfläche der Auffangwanne 20 bis 400 mm unter der Ebene des kokstragenden Bodens der Koksofenkammer befindet und dadurch einen Absatz mit der Ebene des kokstragenden Bodens der Koksofenkammer bildet. Der Kokskuchen, welcher aus der Koksofenkammer ausgedrückt wird, rutscht bei dem Ausdrückvorgang aus der Koksofenkammer, und gleitet über das Bauteil, so dass das Bauteil durch seine Unebenheit die Kokscharge mit dem Gewicht und der Bewegungsenergie der Kokscharge auseinanderbricht.

Das Bauteil ist beliebig geartet, hat aber bevorzugt eine Form, die das Auseinanderbrechen der heißen Kokscharge erleichtert. Das Bauteil ist bevorzugt temperaturbeständig, so dass dieses durch die heiße Kokscharge nicht verändert wird. Das Bauteil kann aber auch brennbar sein, wenn die mechanische Stabilität des Bauteils so ausgelegt ist, dass dieses zum einmaligen Auseinanderbrechen der Kokscharge ausreicht. Das Bauteil verbrennt dann beim Darübergleiten des Kokses und wird nach jedem Ausdrückvorgang erneuert.

Beansprucht wird eine Vorrichtung zur Erhöhung der inneren Oberfläche eines kompakten Kokskuchens in einer Aufnahmewanne, umfassend
- eine horizontale Koksofenkammer als Teil einer Koksofenbank des Typs "Heat-Recovery" oder "Non-Recovery" mit stirnseitigen Koksofenkammertüren,
- eine Aufnahmewanne, geeignet zur Platzierung auf oder in einem Kokslöschwagen für frischen und warmen Koks, wobei der Löschwagen parallel entlang der Koksofenkammerfront verfahrbar ist, und welche dadurch gekennzeichnet ist, dass
- sich die Oberfläche der Auffangwanne 20 bis 400 mm unter der Ebene des kokstragenden Bodens der Koksofenkammer befindet und dadurch einen Absatz mit der Ebene des kokstragenden Bodens der Koksofenkammer bildet, und in dem Boden der Aufnahmewanne mindestens ein unebenheitsbildendes Bauteil angeordnet ist, welches eine Bauteilhöhe von mindestens 20 mm besitzt.

Das Bauteil ist so geartet und geformt, dass das Bauteil ein Auseinanderbrechen der Kokscharge durch deren Gewicht und Bewegungsenergie ermöglicht. In einer typischen Ausführungsform ist das Bauteil keilförmig. In einer weiteren Ausführungsform ist das Bauteil quaderförmig oder ringförmig. Bei einer keilförmigen oder quaderförmigen Ausführungsform wird das Bauteil vorteilhaft so ausgerichtet, dass dieses mit Keil oder Quader parallel zur Ausdrückrichtung des Kokses angeordnet ist. Das Bauteil kann auch halbringförmig sein, wobei die ringbildende Hälfte auf dem Boden der Auffangwanne eine beliebige Ausrichtung besitzen kann. Das Bauteil ist in einer weiteren Ausführungsform höckerförmig oder kegelförmig. Die Bauteile können auch in ihrer unterschiedlichen Form kombiniert werden.

Die Anordnung der Bauteile erfolgt in einer typischen Ausführungsform in Reihen. Die Reihen bestehen dann bevorzugt aus gleichartig geformten Bauteilen. Die Bauteile können jedoch auch in diesen Reihen in verschiedener Form und beliebig angeordnet sein. Die Anordnung in Reihen kann auch so erfolgen, dass sich zwischen den Reihen der Bauteile koksundurchlässige Luftspalte befinden, die im Boden der Auffangwanne angeordnet sind, und die den Boden der Auffangwanne nach unten belüften.

Das Bauteil kann aus einem beliebigen Material hergestellt werden. In einer Ausführungsform der Erfindung besteht dieses Bauteil aus einem hitzebeständigen Metall. In einer bevorzugten Ausführungsform besteht dieses Bauteil aus hitzebeständigem Stahl. In einer weiteren Ausführungsform besteht dieses Bauteil aus einem keramischen Material. Das Bauteil kann jedoch auch aus einem siliziumhaltigen oder aluminiumhaltigen oxidischen Material bestehen. Diese Materialien werden üblicherweise beim Bau der Koksofenkammern verwendet und sind temperaturbeständig, so dass diese über eine Vielzahl von Ausdrückvorgängen stabil sind. Die Bauteile können in einer weiteren Ausführungsform aus einem brennbaren Material geartet sein. Das brennbare Material ist beispielsweise Holz oder gepresster Koksgrus. Dieses Material ist stabil genug, um ein einmaliges Auseinanderbrechen der Kokscharge zu ermöglichen. Es wird dann nach einem Ausdrückvorgang erneuert, wenn ein nochmaliges Auseinanderbrechen der Kokscharge beim Ausdrücken erwünscht ist.

Die Auffangwanne ist typischerweise Bestandteil eines Löschwagens. Der Löschwagen wird dabei von der Ausdrückmaschine beladen. In einer bevorzugten Ausführungsform befindet sich zwischen dem Boden der Verkokungskammer und der Auffangwanne ein vertikaler Absatz. In einer weiteren Ausführungsform befindet sich zwischen dem Boden der Verkokungskammer und der Auffangwanne eine schräge Bo-denplatte oder Rampe zum Überleiten des Kokses in die Auffangwanne. Diese kann ausgebildet sein, wie dies im Stand der Technik üblich ist. Eine Ausführungsform für eine Rampe, die für das Überleiten des Kokses in die Auffangwanne möglich ist, gibt die DE 582264 C. Die Rampe kann zur Ausführung der vorliegenden Erfindung ebenfalls mit mindestens einem unebenheitsbildenden, hitzebeständigen erfindungsgemä-ßen Bauteil versehen sein, welches eine Bauteilhöhe von mindestens 20 mm besitzt. Hierzu kann die Rampe mit Seitenwänden ausgestattet sein.

Die Oberfläche der Auffangwanne befindet sich zur Ausführung der Erfindung 20 bis 400 mm unter der Ebene des kokstragenden Bodens der Koksofenkammer. Es bildet sich somit zwischen dem Boden der Koksofenkammer und der Auffangwanne ein Höhenunterschied (Δh) oder Absatz. Dadurch erhält die Kokscharge beim Ausdrücken genügend Bewegungsenergie, um beim Herabfallen oder Gleiten in die Auffangwanne aufgebrochen zu werden.

Beansprucht wird auch ein Verfahren zum Erhöhen der inneren Oberfläche eines kompakten Kokskuchens beim Ausdrücken in eine Auffangwanne und einen Löschwagen. Das Erhöhen der inneren Oberfläche geschieht durch das Auseinanderbrechen des heißen Kokskuchens beim Überleiten in die Auffangwanne, wobei durch die Formgebung der Bauteile auch die Oberfläche der Koksstücke erhöht werden kann.

Beansprucht wird ein Verfahren zur Erhöhung der inneren Oberfläche eines kompakten Kokskuchens in dem
- die Koksofenkammer einer Koksofenbank des Typs "Heat-Recovery" oder "Non-Recovery" mit Kohle beladen wird, die zur Verkokung vorgesehen ist, und diese in einem zyklischen Ablauf verkokt wird, und
- der Koks nach dem Verkokungsvorgang als kompakter und fester Kokskuchen aus der Koksofenkammer durch eine Druckmaschine in die Auffangwanne eines Löschwagens ausgedrückt wird,
und welches dadurch gekennzeichnet ist, dass
- der kompakte und feste Kokskuchen (4) beim Ausdrücken aus der Koksofenkammer in die Auffangwanne (1) über einen Absatz geschoben wird, der einen Höhenunterschied (Δh, 10) von 20 bis 400 mm überwindet, oder
- der kompakte und feste Kokskuchen (4) beim Ausdrücken aus der Koksofenkammer in die Auffangwanne (1) über eine Rampe (9) geschoben wird, die einen Höhenunterschied (Δh, 10) von 20 bis 400 mm überwindet, so dass
- der Kokskuchen (4) beim Ausdrücken genügend Bewegungsenergie erhält, um beim Herabfallen oder Gleiten in die Auffangwanne (1) aufgebrochen zu werden und die unebenheitsbildenden Bauteile (5) durch ihre Unebenheit den Kokskuchen (4) mit dem Gewicht und der Bewegungsenergie des Kokskuchens (4) auseinanderbrechen, und
- der kompakte und feste Kokskuchen bei dem Ausdrückvorgang in die Auffangwanne über unebenheitsbildende Bauteile geschoben wird, die sich in dem Boden der Auffangwanne befinden, so dass der frische und glühende Koks nach oben hin auseinanderbricht und in mehrere Teilstücke zerfällt.

Häufig wird der Kokskuchen über einen Absatz oder über eine Rampe geschoben, so dass ein Höhenunterschied zu überwinden ist. Durch die Überwindung des Höhenunterschieds gewinnt der Kokskuchen kinetische Fallenergie, die zum Aufbrechen der Kokskuchens beiträgt. Der kompakte und feste, heiße Kokskuchen wird in einer typischen Ausführungsform beim Ausdrücken in die Auffangwanne mit dem oder den Bauteilen geschoben, um dessen innere Oberfläche zu erhöhen. Dabei erhöht sich die Permeabilität des Kokses für das Löschwasser. Es ist denkbar, die Bauteile prinzipiell für jeden Koks einzusetzen, so lange dieser frisch und warm ist und zur Erhöhung der inneren Oberfläche eignet. So können die Bauteile auch eingesetzt werden, um frischen, aber bereits abgelöschten Koks über eine Platte oder eine Wanne zuschieben, die mit den erfindungsgemäßen Bauteilen ausgestattet sind, und beim Darüberbewegen des Kokses dessen innere Oberfläche erhöhen.

Typischerweise wird der Koks aus der Koksofenkammer in die Auffangwanne über eine Rampe oder eine schräge Bodenplatte geschoben, die einen Höhenunterschied von 20 bis 400 mm überwindet. In einer weiteren Ausführungsform wird der heiße Koks beim Ausdrücken aus der Koksofenkammer in die Ebene der Auffangwanne über einen Absatz geschoben, der gegenüber dem Boden der Koksofenkammer einen Höhenunterschied von 20 bis 400 mm überwindet. Ein Absatz mit einem größeren Höhenunterschied würde eine verstärkte Emissionsbildung mit einer entsprechenden Umweltbelastung nach sich ziehen, wie es aus der konventionellen Horizontalkammerverkokungstechnologie bekannt ist, weshalb dort Absaugehauben zur Emissionsevakuierung eingesetzt werden.

Zur Ausführung des Verfahrens können die Bauteile aus einem hochtemperaturbeständigen Material gefertigt sein. Dadurch können die Bauteile für eine Vielzahl von Ausdrückvorgängen genutzt werden. Das oder die Bauteile können jedoch auch aus einem brennbaren Material gefertigt sein. Das Bauteil wird dann nach jedem Ausdrückvorgang erneuert, wenn eine mehrfache Anwendung gewünscht wird.

Das oder die Bauteile können auch aus Einzelbauteilen zusammengesetzt sein, wobei das Bauteil vor jedem Einsetzen in die Auffangwanne aus den Einzelbauteilen zusammengesetzt wird. Dadurch lassen sich die Bauteile besser für den jeweiligen Einsatzzweck vorbereiten.

Das erfindungsgemäße Verfahren kann für jede Art von Koksofenkammern und Koksofenbänken des eingangs besprochenen Typs verwendet werden. Das Verfahren ist sowohl für ein Verfahren der Nasslöschung mit oder ohne "Sumpflöschung", als auch mit einem Verfahren der Trockenlöschung von Koks anwendbar.

Die Erfindung besitzt den Vorteil, die Löschung und Kühlung des glühenden Kokses zu ermöglichen, ohne zu einer ungleichmäßigen Verteilung der Temperatur oder des Wassergehaltes der Kokscharge zu führen. Dadurch kann ein Koks erhalten werden, der, bedingt durch einen verringerten Restwassergehalt, eine verbesserte Qualität des Roheisens erzeugt. Auch führt das erfindungsgemäße Verfahren zu einem Ausschluss von Restglutherden im fertigen Koks, so dass die nachfolgenden Transport- und Verwendungseinrichtungen für den Koks geschont werden. Insgesamt wird so eine verbesserte Wirtschaftlichkeit des gesamten Verkokungsprozesses erhalten.

Die Erfindung wird anhand von acht Zeichnungen genauer erläutert, wobei das erfindungsgemäße Verfahren nicht auf diese Ausführungsformen beschränkt ist. FIG.1 bis FIG.3 zeigen Ausführungsformen für eine Auffangwanne in einem Löschwagen, die mit einem keilförmigen Bauteil ausgestattet sind. FIG.4 bis FIG.5 zeigen Ausführungsformen für eine Auffangwanne in einem Löschwagen, die mit einer Vielzahl an keilförmigen Bauteilen ausgestattet sind. FIG.6 bis FIG.8 zeigen Ausführungsformen für eine Auffangwanne in einem Löschwagen, die mit einer Vielzahl an keilförmigen Bauteilen ausgestattet sind, die eine unterschiedliche Formgebung besitzen.

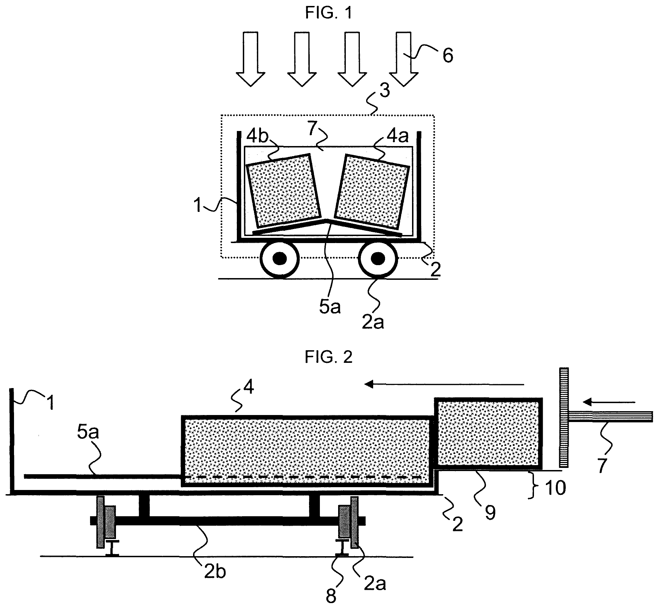

FIG. 1 zeigt eine Auffangwanne (**1**) in einem Löschwagen (**2**) mit Rädern (**2a**), die vor der Tür (**3**) einer Koksofenkammeröffnung angeordnet ist. Die Kokscharge (4a,4b) wird in die Auffangwanne (**1**) geschoben, wobei die Kokscharge (**4**) durch das auf dem Boden der Auffangwanne (**1**) angeordnete keilförmige Bauteil (**5a**) in zwei Teilchargen (**4a,4b**) auseinanderbricht. Dadurch kommt es zu einer Erhöhung der inneren Oberfläche des Kokskuchens (**4**), wodurch das Löschwasser (**6**), welches beim Löschvorgang von oben auf die Kokscharge (**4a,4b**) strömt, auch in das Innere der Kokscharge (**4a,4b**) vordringen kann. Zu sehen ist auch der Ausdrückstempel (**7**) der Druckmaschine.
FIG.2 zeigt die gleiche Auffangwanne (**1**) in seitlicher Ansicht, wobei der Ausdrückstempel (**7**) der Druckmaschine zu sehen ist. Zu sehen sind ebenfalls die Achsen (**2b**) und die Räder (**2a**) des Löschwagens (**2**), die auf einer Schiene (**8**) angeordnet sind. Der heiße Koks (**4**) wird aus der Koksofenkammer in Pfeilrichtung über eine Rampe (**9**) in die Auffangwanne (**1**) geschoben, wobei der Koks (**4**) einen Höhenunterschied Δh (**10**) von 20 bis 400 mm überwindet. Durch das in der Mitte angeordnete keilförmige Bauteil (**5a**) wird beim Darübergleiten der Kokscharge (**4**) ein Auseinanderbrechen der Kokscharge (**4**) erreicht. Der Höhenunterschied (**10**) verstärkt das Auseinanderbrechen der Kokscharge (**4**) in Längsrichtung.

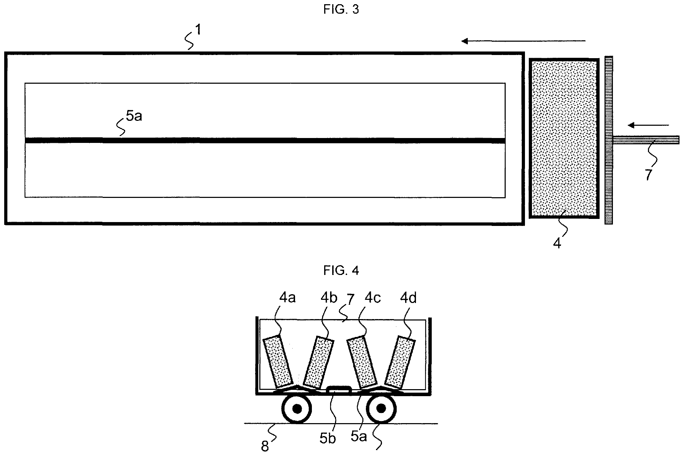

FIG.3 zeigt die Auffangwanne (**1**) des gleichen Löschwagens (**2**) in der vertikalen Ansicht von oben. Zu sehen ist die Spitze des keilförmigen Bauteils (**5a**), welche sich über fast die gesamte Länge der Auffangwanne (**1**) erstreckt.
FIG.4 zeigt die Auffangwanne (**1**) mit einer Mehrzahl von keilförmigen Bauteilen (**5**). Diese sind in zwei Reihen zu jeweils zwei Bauteilen (**5**) über die Länge der Auffangwanne (**1**) verteilt. Der Kokskuchen (**4**) bricht beim Gleiten über die keilförmigen Bauteile (**5a**) in jeweils zwei Hälften (**4a-d**). Dadurch kommt es zu einem Auseinanderbrechen der Kokscharge (**4a,4b**) mit einer Erhöhung der inneren Oberfläche. In der Mitte befinden sich zwei langgestreckte, quaderförmige Bauteile (**5b**). Dies führt zu einem weiteren Aufbrechen mit geringerer Oberfläche. Die seitliche Ansicht entspricht der von FIG.2.

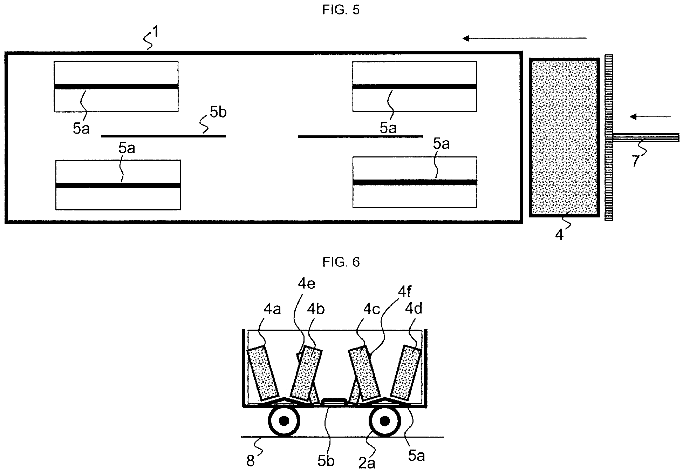

FIG.5 zeigt die gleiche Auffangwanne (**1**) von oben, mit zwei Reihen von jeweils zwei keilförmigen Bauteilen (**5a**) und eine mittlere Reihe von zwei langgestreckten quaderförmigen Bauteilen (**5b**).
FIG.6 zeigt eine Auffangwanne (**1**) von einem Löschwagen (**2**) mit zwei keilförmigen (**5a**) und einem quer zur Ausdrückrichtung ausgerichteten quaderförmigen (**5b**) Bauteil. Zwei keilförmige Bauteile **(**5a**)** sind im vorderen Teil der Auffangwanne (**1**) längs zur Ausdrückvorrichtung angeordnet, zwei weitere Bauteile (**5)** sind kegelförmig (**5c**) und nicht sichtbar im hinteren Teil der Auffangwanne (**1**) angeordnet. Beim Ausdrücken gleitet der Kokskuchen (**4**) über die Bauteile (**5a,5b**) und bricht in mehrere Chargen (**4a-4f**) auf.

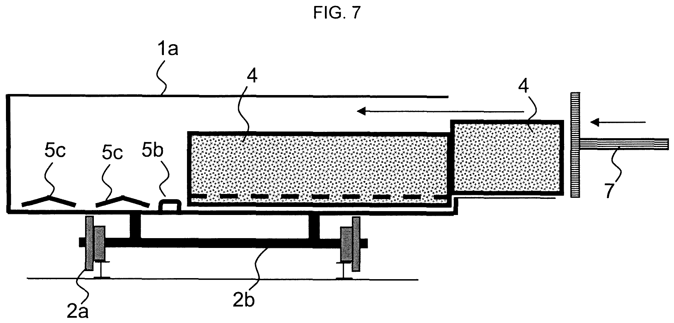

FIG.7 zeigt die gleiche Auffangwanne (**1**) in seitlicher Ansicht, wobei im vorderen Teil der Auffangwanne (**1**) zwei kegelförmige Bauteile (**5c**) zu sehen sind, die bereits vom einlaufenden Kokskuchen (**4**) bedeckt sind. In der Mitte der Auffangwanne (**1**) ist ein unbedecktes, querliegendes quaderförmiges Bauteil (**5b**) und im hinteren Teil der Auffangwanne (**1**) sind neun keilförmige Bauteile (**5a**) in zwei Reihen parallel zur Ausdrückrichtung des Kokskuchens (**1**) angeordnet. Die seitliche Ansicht entspricht der von FIG.2. Wie bereits in FIG.2 muss der Kokskuchen (**4**) beim Einlaufen in die Auffangwanne (**1**) aus der Koksofenkammer einen Höhenunterschied (**10**) überwinden. Die Auffangwanne (**1**) besitzt hier eine Abdeckung (**1b**).

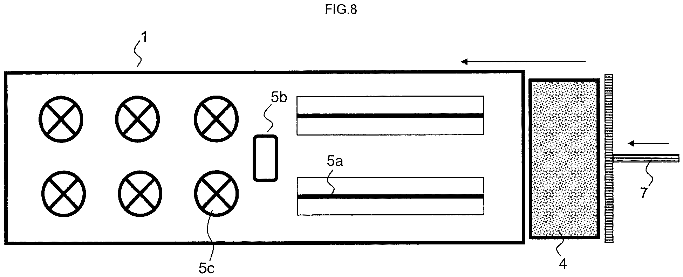

FIG.8 zeigt die gleiche Auffangwanne (**1**) von oben, mit zwei Reihen von jeweils zwei keilförmigen Bauteilen (**5a**) im vorderen Teil der Auffangwanne (**1**), ein querliegendes quaderförmiges Bauteil (**5b**) in der Mitte und sechs kegelförmigen Bauteilen (**5c**) im hinteren Teil der Auffangwanne (**1**).

### Bezugszeichenliste

- 1: Auffangwanne oder Aufnahmewanne
- 1a: Abdeckung der Auffangwanne
- 2: Löschwagen
- 2a: Achsen des Löschwagens
- 2b: Räder des Löschwagens
- 3: Tür der Koksofenkammer
- 4: Kokskuchen
- 4a-f: Kokschargen
- 5: Bauteil
- 5a: Keilförmiges Bauteil
- 5b: Quaderförmiges Bauteil
- 5c: Kegelförmiges Bauteil
- 6: Löschwasser
- 7: Ausdrückstempel der Druckmaschine
- 8: Schienen
- 9: Rampe, schräge Bodenplatte
- 10: Höhenunterschied, Δh

## Patentansprüche

1. Vorrichtung zur Erhöhung der inneren Oberfläche eines kompakten Kokskuchens (4) in einer Aufnahmewanne (1), umfassend
• eine horizontale Koksofenkammer als Teil einer Koksofenbank des Typs "Heat-Recovery" oder "Non-Recovery" mit stirnseitigen Koksofenkammertüren (3), und
• eine Aufnahmewanne (1), geeignet zur Platzierung auf oder in einem Kokslöschwagen (2) für frischen und warmen Koks (4), wobei der Kokslöschwagen (2) parallel entlang der Koksofenkammerfront verfahrbar ist,
**dadurch gekennzeichnet, dass**
• sich die Oberfläche der Auffangwanne (1) 20 bis 400 mm unter der Ebene des kokstragenden Bodens der Koksofenkammer befindet und dadurch einen Absatz (10) mit der Ebene des kokstragenden Bodens der Koksofenkammer bildet, und
• in dem Boden der Aufnahmewanne (1) mindestens ein unebenheitsbildendes Bauteil (5) angeordnet ist, welches eine Bauteilhöhe von mindestens 20 mm besitzt.

2. Vorrichtung nach Anspruch 1, **dadurch gekennzeichnet, dass** das Bauteil (5) keilförmig (5a) ist.

3. Vorrichtung nach Anspruch 1, **dadurch gekennzeichnet, dass** das Bauteil (5) quaderförmig (5b) ist.

4. Vorrichtung nach Anspruch 1, **dadurch gekennzeichnet, dass** das Bauteil (5) ringförmig ist.

5. Vorrichtung nach Anspruch 1, **dadurch gekennzeichnet, dass** das Bauteil (5) halbringförmig ist, wobei die ringbildende Hälfte auf dem Boden der Auffangwanne (1) eine beliebige Ausrichtung besitzen kann.

6. Vorrichtung nach Anspruch 1, **dadurch gekennzeichnet, dass** das Bauteil (5) höckerförmig ist.

7. Vorrichtung nach Anspruch 1, **dadurch gekennzeichnet, dass** das Bauteil (5) kegelförmig (5c) ist.

8. Vorrichtung nach einem der Ansprüche 1 bis 7, **dadurch gekennzeichnet, dass** die keilförmigen (5a), quaderförmigen (5b), ringförmigen, halbringförmigen, höckerförmigen und kegelförmigen (5c) Bauteile in ihrer unterschiedlichen Form kombiniert werden.

9. Vorrichtung nach einem der Ansprüche 1 bis 8, **dadurch gekennzeichnet, dass** die Anordnung der Bauteile (5) in Reihen erfolgt.

10. Vorrichtung nach einem der Ansprüche 1 bis 9, **dadurch gekennzeichnet, dass** die Anordnung der Bauteile (5) in Reihen erfolgt, wobei sich zwischen den Reihen koksundurchlässige Luftspalte befinden, die den Boden der Auffangwanne (1) nach unten belüften.

11. Vorrichtung nach einem der Ansprüche 1 bis 10, **dadurch gekennzeichnet, dass** dieses Bauteil (5) aus einem keramischen Material besteht.

12. Vorrichtung nach einem der Ansprüche 1 bis 10, **dadurch gekennzeichnet, dass** dieses Bauteil (5) aus einem siliziumhaltigen oder aluminiumhaltigen oxidischen Material besteht.

13. Vorrichtung nach einem der Ansprüche 1 bis 10, **dadurch gekennzeichnet, dass** dieses Bauteil (5) aus einem hitzebeständigen Metall besteht.

14. Vorrichtung nach Anspruch 13, **dadurch gekennzeichnet, dass** dieses Bauteil (5) aus hitzebeständigem Stahl besteht.

15. Vorrichtung nach einem der Ansprüche 1 bis 14, **dadurch gekennzeichnet, dass**
• sich zwischen dem Boden der Koksofenkammer und der Auffangwanne (1) eine schräge Bodenplatte (9) oder Rampe zum Überleiten des Kokses (4) befindet, auf der ebenfalls mindestens ein unebenheitsbildendes, hitzebeständiges Bauteil (5) angeordnet ist, welches eine Bauteilhöhe von mindestens 20 mm besitzt.

16. Verfahren zur Erhöhung der inneren Oberfläche eines kompakten Kokskuchens (4) in einer Aufnahmewanne (1) nach einem der Ansprüche 1 bis 15, in dem
• die Koksofenkammer einer Koksofenbank des Typs "Heat-Recovery" oder "Non-Recovery" mit Kohle beladen wird, die zur Verkokung vorgesehen ist, und diese in einem zyklischen Ablauf verkokt wird, und
• der Koks (4) nach dem Verkokungsvorgang als kompakter und fester Kokskuchen (4) aus der Koksofenkammer durch eine Druckmaschine (7) in die Auffangwanne (1) eines Löschwagens (2) ausgedrückt wird,
**dadurch gekennzeichnet, dass**
• der kompakte und feste Kokskuchen (4) beim Ausdrücken aus der Koksofenkammer in die Auffangwanne (1) über einen Absatz geschoben wird, der einen Höhenunterschied (Δh, 10) von 20 bis 400 mm überwindet, oder
• der kompakte und feste Kokskuchen (4) beim Ausdrücken aus der Koksofenkammer in die Auffangwanne (1) über eine Rampe (9) geschoben wird, die einen Höhenunterschied (Δh, 10) von 20 bis 400 mm überwindet, so dass
• der Kokskuchen (4) beim Ausdrücken genügend Bewegungsenergie erhält, um beim Herabfallen oder Gleiten in die Auffangwanne (1) aufgebrochen zu werden und die unebenheitsbildenden Bauteile (5) durch ihre Unebenheit den Kokskuchen (4) mit dem Gewicht und der Bewegungsenergie des Kokskuchens (4) auseinanderbrechen, und
• der kompakte und feste Kokskuchen (4) bei dem Ausdrückvorgang in die Auffangwanne (1) über unebenheitsbildende Bauteile (5) geschoben wird, die sich in dem Boden der Auffangwanne (1) befinden, so dass der frische und glühende Koks (4) nach oben hin auseinanderbricht und in mehrere Teilstücke (4a-f) zerfällt.

17. Verfahren nach Anspruch 16, **dadurch gekennzeichnet, dass** mindestens ein Bauteil (5) aus einem brennbaren Material gefertigt ist, und das Bauteil (5) nach jedem Ausdrückvorgang erneuert wird.

18. Verfahren nach einem der Ansprüche 16 oder 17, **dadurch gekennzeichnet, dass** mindestens ein Bauteil (5) aus Einzelbauteilen zusammengesetzt ist, und das Bauteil (5) vor jedem Einsetzen in die Auffangwanne (1) aus den Einzelbauteilen (5) zusammengesetzt wird.

## Claims

1. Device for increasing the internal surface area of a compact coke cake (4) in a receiving trough (1), comprising
- a horizontal coke oven chamber as part of a coke oven bank of the "heat-recovery" or "non-recovery" type, with end-side coke oven chamber doors (3), and
- a receiving trough (1) suitable for placing on or in a coke quenching car (2) for fresh and hot coke (4), wherein the coke quenching car (2) can be driven along and parallel to the coke oven chamber front,
**characterized in that**
- the surface of the receiving trough (1) is located 20 to 400 mm below the plane of the coke-carrying floor of the coke oven chamber and thus forms a step (10) with the plane of the coke-carrying floor of the coke oven chamber, and
- at least one disruptive component (5), having a component height of at least 20 mm, is arranged in the bottom of the receiving trough (1).

2. Device according to Claim 1, **characterized in that** the component (5) is wedge-shaped (5a).

3. Device according to Claim 1, **characterized in that** the component (5) is cuboidal (5b).

4. Device according to Claim 1, **characterized in that** the component (5) is annular.

5. Device according to Claim 1, **characterized in that** the component (5) is semi-annular, wherein the half forming a ring on the floor of the receiving trough (1) can have any orientation.

6. Device according to Claim 1, **characterized in that** the component (5) is hump-shaped.

7. Device according to Claim 1, **characterized in that** the component (5) is conical (5c).

8. Device according to one of Claims 1 to 7, **characterized in that** the wedge-shaped (5a), cuboidal (5b), annular, semi-annular, hump-shaped and conical (5c) components in their different shapes are combined.

9. Device according to one of Claims 1 to 8, **characterized in that** the components (5) are arranged in rows.

10. Device according to one of Claims 1 to 9, **characterized in that** the components (5) are arranged in rows, wherein coke-impermeable air gaps are located between the rows and ventilate underneath the bottom of the receiving trough (1).

11. Device according to one of Claims 1 to 10, **characterized in that** this component (5) is made of a ceramic material.

12. Device according to one of Claims 1 to 10, **characterized in that** this component (5) is made of a silicon-containing or aluminium-containing oxidic material.

13. Device according to one of Claims 1 to 10, **characterized in that** this component (5) is made of a heat-resistant metal.

14. Device according to Claim 13, **characterized in that** this component (5) is made of heat-resistant steel.

15. Device according to one of Claims 1 to 14, **characterized in that** there is located, between the floor of the coke oven chamber and the receiving trough (1), an inclined bottom plate (9) or ramp for transferring the coke (4), on which there is also arranged at least one disruptive heat-resistant component (5) having a component height of at least 20 mm.

16. Method for increasing the internal surface area of a compact coke cake (4) in a receiving trough (1) according to one of Claims 1 to 15, in which
- the coke oven chamber of a coke oven bank of the "heat-recovery" or "non-recovery" type is charged with coal which is intended for coking and is coked in a cyclical process, and
- after the coking procedure, the coke (4), in the form of a compact and solid coke cake (4), is ejected from the coke oven chamber by an ejection machine (7), into the receiving trough (1) of a quenching car (2),
**characterized in that**
- on ejection from the coke oven chamber into the receiving trough (1), the compact and solid coke cake (4) is pushed over a step having a height difference (Δh, 10) of 20 to 400 mm, or
- on ejection from the coke oven chamber into the receiving trough (1), the compact and solid coke cake (4) is pushed over a ramp (9) having a height difference (Δh, 10) of 20 to 400 mm, such that
- on ejection, the coke cake (4) obtains enough kinetic energy to be broken up when it drops or slides into the receiving trough (1), and the unevenness of the disruptive components (5) breaks apart the coke cake (4) using the weight and kinetic energy of the coke cake (4), and
- in the course of the ejection procedure into the receiving trough (1), the compact and solid coke cake (4) is pushed over disruptive components (5) that are located in the bottom of the receiving trough (1) such that the fresh and glowing coke (4) breaks apart towards the top and disintegrates into multiple smaller pieces (4a-f).

17. Method according to Claim 16, **characterized in that** at least one component (5) is made of a combustible material, and the component (5) is renewed after each ejection procedure.

18. Method according to either of Claims 16 and 17, **characterized in that** at least one component (5) is composed of individual components, and the component (5) is put together from the individual components (5) each time before it is placed in the receiving trough (1).

## Revendications

1. Dispositif destiné à augmenter la surface intérieure d'un gâteau de coke (4) compact dans une cuve de réception (1), comprenant
- une chambre de carbonisation horizontale, en tant que partie d'une batterie de fours à coke du type « récupération de chaleur » ou « non récupération », avec des portes (3) frontales de chambre de carbonisation et
- une cuve de réception (1) adaptée pour un placement sur ou dans un chariot d'extinction de coke (2) pour du coke (4) frais et chaud, le chariot d'extinction de coke (2) étant déplaçable à la parallèle le long du front de la chambre de carbonisation,
**caractérisé en ce que**
- la surface de la cuve de réception (1) se trouve à de 20 à 400 mm en-dessous du niveau du fond inférieur portant le coke de la chambre de carbonisation et forme de ce fait un gradin (10) avec le niveau du fond inférieur portant le coke de la chambre de carbonisation et
- dans le fond inférieur de la cuve de réception (1) est placé au moins un élément constitutif (5) formant des aspérités, lequel présente une hauteur d'élément constitutif d'au moins 20 mm.

2. Dispositif selon la revendication 1, **caractérisé en ce que** l'élément constitutif (5) est cunéiforme (5a).

3. Dispositif selon la revendication 1, **caractérisé en ce que** l'élément constitutif (5) a la forme d'un parallélépipède (5b).

4. Dispositif selon la revendication 1, **caractérisé en ce que** l'élément constitutif (5) est de forme annulaire.

5. Dispositif selon la revendication 1, **caractérisé en ce que** l'élément constitutif (5) est de forme semi-annulaire, la moitié formant l'anneau sur le fond de la cuve de réception (1) pouvant présenter une orientation quelconque.

6. Dispositif selon la revendication 1, **caractérisé en ce que** l'élément constitutif (5) a la forme d'une protubérance.

7. Dispositif selon la revendication 1, **caractérisé en ce que** l'élément constitutif (5) est de forme conique (5c).

8. Dispositif selon l'une quelconque des revendications 1 à 7, **caractérisé en ce que** les éléments constitutifs cunéiformes (5a), en parallélépipède (5b), de forme annulaire, de forme semi-annulaire, en forme de protubérances et de forme conique (5c) sont associés dans leurs différentes formes.

9. Dispositif selon l'une quelconque des revendications 1 à 8, **caractérisé en ce que** la disposition des éléments constitutifs (5) s'effectue en rangées.

10. Dispositif selon l'une quelconque des revendications 1 à 9, **caractérisé en ce que** la disposition des éléments constitutifs (5) s'effectue en rangées, entre les rangées se trouvant des fentes d'aération imperméables au coke qui ventilent le fond de la cuve de réception (1) vers le bas.

11. Dispositif selon l'une quelconque des revendications 1 à 10, **caractérisé en ce que** cet élément constitutif (5) est constitué d'une matière céramique.

12. Dispositif selon l'une quelconque des revendications 1 à 10, **caractérisé en ce que** cet élément constitutif (5) est constitué d'une matière oxydée contenant du silicium ou contenant de l'aluminium.

13. Dispositif selon l'une quelconque des revendications 1 à 10, **caractérisé en ce que** cet élément constitutif (5) est constitué d'un métal thermorésistant.

14. Dispositif selon la revendication 13, **caractérisé en ce que** cet élément constitutif (5) est constitué d'acier thermorésistant.

15. Dispositif selon l'une quelconque des revendications 1 à 14, **caractérisé en ce qu'entre** le fond de la chambre de carbonisation et la cuve collectrice (1) se trouve une plaque de fond (9) inclinée ou rampe pour le transfert du coke (4), sur laquelle est placé également un élément constitutif (5) thermorésistant, formant des aspérités, qui présente une hauteur d'élément constitutif d'au moins 20 mm.

16. Procédé destiné à augmenter la surface intérieure d'un gâteau de coke (4) compact dans une cuve de réception (1) selon l'une quelconque des revendications 1 à 15, lors duquel
- on charge avec du charbon prévu pour la cokéfaction la chambre de carbonisation d'une batterie de fours à coke du type «récupération de chaleur» ou «non récupération » et on le fait cokéfier dans un processus cyclique et
- après l'opération de cokéfaction, le coke (4) sous la forme d'un gâteau de coke (4) compact et solide est défourné hors de la chambre de carbonisation dans la cuve collectrice (1) d'un chariot d'extinction (2) par une machine de poussée (7)
**caractérisé en ce que**
- lorsqu'il est défourné hors de la chambre de carbonisation dans la cuve collectrice (1), le gâteau de coke (4) compact et solide est poussé par-dessus un gradin, qui surmonte une différence de hauteur (Δh, 10) de 20 à 400 mm ou
- lorsqu'il est défourné hors de la chambre de carbonisation dans la cuve collectrice (1), le gâteau de coke (4) compact et solide est poussé par-dessus une rampe (9) qui surmonte une différence de hauteur (Δh, 10) de 20 à 400 mm, de sorte que
- lorsqu'il est défourné, le gâteau de coke (4) reçoive une énergie de déplacement suffisante pour se rompre lors de la chute ou du glissement dans la cuve collectrice (1) et que par leurs aspérités, les éléments constitutifs (5) formant des aspérités fassent éclater le gâteau de coke (4) sous l'effet du poids et de l'énergie de déplacement du gâteau de coke (4) et
- lors du processus de défournement dans la cuve collectrice (1), le gâteau de coke (4) compact et solide est poussé par-dessus des éléments constitutifs (5) formant des aspérités qui se trouvent dans le fond de la cuve collectrice (1), de sorte que le coke frais (4) incandescent éclate vers le haut et se désagrège en plusieurs morceaux partiels (4a à f).

17. Procédé selon la revendication 16, **caractérisé en ce qu'**au moins un élément constitutif (5) est fabriqué dans une matière combustible et **en ce que** l'élément constitutif (5) est remplacé après chaque processus de défournement.

18. Procédé selon l'une quelconque des revendications 16 ou 17, **caractérisé en ce qu'au** moins un élément constitutif (5) est assemblé à partir de composants individuels et **en ce qu'**avant de l'insérer dans la cuve collectrice (1), on assemble l'élément constitutif (5) à partir des composants individuels (5).
